# EUROPÄISCHE PATENTANMELDUNG

(11) **EP 1 262 221 A1**
(43) Veröffentlichungstag der Anmeldung: **04.12.2002**
(21) Anmeldenummer: 02010125.9
(22) Anmeldetag: 10.05.2002
(51) Int. Cl.: B01D 1/00, B01D 3/00

(54) **Umlaufverdampfer mit gekammerten Ablaufbehälter**

(30) Priorität: 22.05.2001 DE 10124904
(71) Anmelder: BAYER AG, 51368 Leverkusen (DE)
(72) Erfinder: Küpper, Kurt-Manfred, 51375 Leverkusen (DE); Fellhölter, Andre, Dr., 51427 Bergisch Gladbach (DE)

(57) **Zusammenfassung**

Die Erfindung betrifft einen Umlaufverdampfer zur Trennung von Gemischen aus leichter und schwerer flüchtigen Komponenten, der einen Ablaufbehälter (4) aufweist, der aus mindestens einer Kammer fiir den Zulauf (4a) und einer Kammer für den Auslass (4b) besteht. Die Erfindung betrifft ferner ein Verfahren zur destillativen Trennung eines Gemisches aus leichter und schwerer flüchtigen Komponenten unter Einsatz des Umlaufverdampfers.

## Beschreibung

Die Erfindung betrifft einen Umlaufverdampfer zur Trennung von Gemischen aus leichter und schwerer flüchtigen Komponenten, der einen Ablaufbehälter bestehend aus mindestens zwei Kammern aufweist. Die Erfindung betrifft ferner ein Verfahren zur destillativen Trennung eines Gemisches aus leichter und schwerer flüchtigen Komponenten.

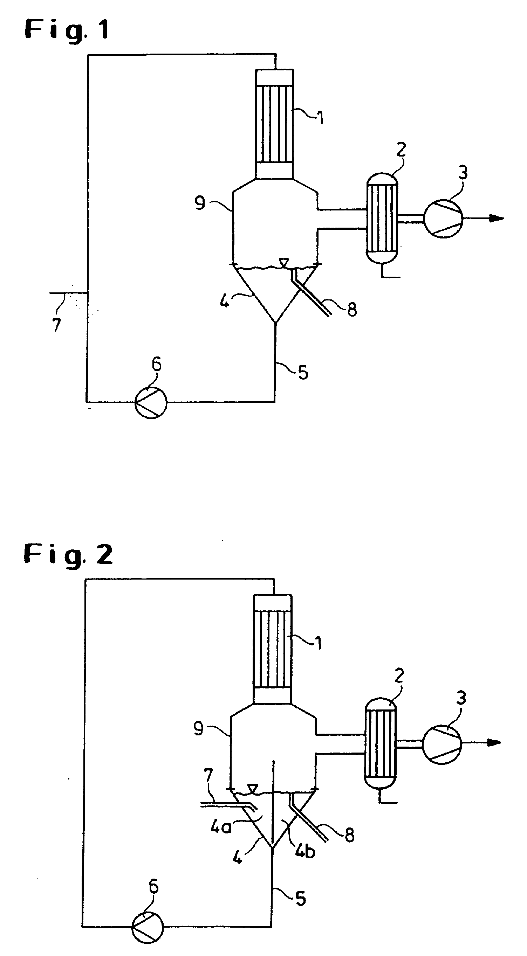

Umlaufverdampfer nach dem Stand der Technik bestehen im Allgemeinen aus einem Verdampfer und einem damit über ein Verbindungsstück verbundenen Ablaufbehälter, einem Kondensator, einer Vakuumpumpe, einer Umpumpleitung, die den Ablaufbehälter mit dem Verdampfer verbindet und eine Umlaufpumpe enthält, einer Zulaufleitung für das Rohgemisch und einer Auslassleitung für das gereinigte Gemisch. Der Auslass des gereinigten Gemisches erfolgt dabei im Allgemeinen aus dem Ablaufbehälter, der Zulauf des Rohgemisches erfolgt im Allgemeinen in die Umpumpleitung, durch die das Gemisch von dem Ablaufbehälter zum Verdampfer gepumpt wird. Ein Umlaufverdampfer nach dem Stand der Technik ist in Figur 1 dargestellt.

Typische Beispiele für Umlaufverdampfer nach dem Stand der Technik sind z.B. in
Dr. Hermann Stage, Fettsäure- Geradeausdestillation und -Fraktionierung unter dem
Gesichtswinkel der Wirtschaftlichkeit, CZ-Chemie-Technik, Jahrgang 2, Seite 254-260 [1973],
Joachim Gebel, Gülle - Aufbereitung: umweltgerecht und wirtschaftlich, WLB, Wasser, Luft und Boden 6, Seite 20-26 [1992],
B. Gericke, Zwangsumlaufverdampfer im GUD-Prozeß und Druckaufgeladenen Systemen, Teil 1: Atmosphärischer GUD-Verdampfer, Brennst.-Wärme-Kraft, Bd 4, Nr.6 Seite 247-256 [1992] und
B. Gericke, Zwangsumlaufverdampfer im GUD-Prozeß und in druckaufgeladenen Systemen, Teil 2: Druckaufgeladener Kohlegas-Verdampfer, Brennst.-Wärme-Kraft, Bd.44, Nr.7/8, Seite 295-304 [1992]
beschrieben.

Bei der Verwendung von Umlaufverdampfern in Verfahren zur Trennung von Lackharz / Isocyanat - Gemischen muss vielfach bei recht hohen Temperaturen und niedrigen Absolutdrücken gearbeitet werden, um die gewünschte Reinheit des Lackharzes einzustellen. Um zu hohe Temperaturen zu vermeiden, müssen die Umlaufverdampfer eine große Verdampfungsfläche zur Verfügung stellen. Damit ergeben sich große Apparate und Verweilzeiten.

Bei zu hohen Temperaturen und zu großen Verweilzeiten unter Temperaturbelastung kommt es zu einer teilweisen Zersetzung des Lackharzes und zu einer Veränderung der Farbe des Lackharzes, was sich in einer Erhöhung der Farbzahl äußert.

Die Aufgabe der vorliegenden Erfindung besteht in der Bereitstellung eines Umlaufverdampfers, mit dem die Verdampfungstemperatur gesenkt und die Wärmebelastung des Gemisches aus leichter und schwerer flüchtigen Komponenten verringert werden kann. Die Aufgabe der Erfindung besteht weiterhin in der Bereitstellung eines Verfahrens zur destillativen Trennung eines Gemisches aus leichter und schwerer flüchtigen Komponenten bei reduzierter Verdampfungstemperatur.

Die Aufgabe wird erfindungsgemäß gelöst durch einen Umlaufverdampfer enthaltend einen Verdampfer und einen damit über ein Verbindungsstück verbundenen Ablaufbehälter, einen Kondensator, eine Vakuumpumpe, eine Umpumpleitung, die den Ablaufbehälter mit dem Verdampfer verbindet und eine Pumpe enthält, eine Zulaufleitung für das Rohgemisch und eine Auslassleitung für das gereinigte Gemisch, dadurch gekennzeichnet, dass der Ablaufbehälter mindestens aus einer Kammer für den Zulauf und einer Kammer für den Auslass besteht, wobei die Kammer für den Auslass, an die die Auslassleitung für das gereinigte Gemisch angeschlossen ist, direkt mit dem Verbindungsstück für den Ablauf der nichtverdampften Flüssigkeit aus dem Verdampfer verbunden ist, und wobei die Kammer für den Zulauf, in die die Zulaufleitung für das Rohgemisch mündet, direkt mit dem Kondensator verbunden ist.

Der Umlaufverdampfer ist Gegenstand der Erfindung.

In einer möglichen Ausführungsform sind die beiden Kammern des Ablaufbehälters parallel geschaltet und beide über das Verbindungsstück an den Verdampfer angeschlossen und weisen beide einen Anschluss an die Rohrleitung auf.

In einer alternativen Ausführungsform sind die beiden Kammern des Ablaufbehälters seriell verschaltet, wobei die Kammer für den Zulauf, in die die Zulaufleitung für das Rohgemisch mündet, hinter der Kammer für den Auslass, aus der die Auslassleitung für das gereinigte Gemisch führt, angeordnet ist und den Anschluss für die Rohrleitung aufweist und wobei die Kammer für den Auslass über das Verbindungsstück an den Verdampfer angeschlossen ist.

Die Aufgabe wird erfindungsgemäß weiterhin gelöst durch ein kontinuierliches Verfahren zur destillativen Trennung eines Gemisches aus leichter und schwerer flüchtigen Komponenten, wobei man den erfindungsgemäßen gekammerten Umlaufverdampfer mit parallel geschalteten Kammern des Ablaufbehälters einsetzt, wobei man der Kammer für den Zulauf des Ablaufbehälters das Rohgemisch durch die Zulaufleitung zuführt, dort 1 bis 95 %, vorzugsweise 10 bis 80 % der leichter flüchtigen Komponente verdampft und im Kondensator wieder kondensiert und aus dem Kondensator ausschleust, den unverdampften Teil aus dem Ablaufbehälter über eine Rohrleitung auf den Verdampfer aufgibt, dort 10 bis 99 %, vorzugsweise 50 bis 90 % der leichter flüchtigen Komponente verdampft und im Kondensator wieder kondensiert und aus dem Kondensator ausschleust, den unverdampften Teil auf die beiden Kammern des Ablaufbehälters aufgibt und aus der Kammer für den Auslass des Ablaufbehälters einen Teil des gereinigten Gemisches über die Auslassleitung abzieht.

Die Aufgabe wird ebenfalls erfindungsgemäß gelöst durch ein kontinuierliches Verfahren zur destillativen Trennung eines Gemisches aus leichter und schwerer flüchtigen Komponenten, wobei man einen Umlaufverdampfer mit seriell verschalteten Kammern des Ablaufbehälters einsetzt, wobei man der Kammer für den Zulauf des Ablaufbehälters das Rohgemisch durch die Zulaufleitung zuführt, dort 1 bis 95 %, vorzugsweise 10 bis 80 % der leichter flüchtigen Komponente verdampft und im Kondensator wieder kondensiert und aus dem Kondensator ausschleust, den unverdampften Teil über eine Rohrleitung auf den Verdampfer aufgibt, dort 10 bis 99 %, vorzugsweise 50 bis 90 % der leichter flüchtigen Komponente verdampft und im Kondensator wieder kondensiert und aus dem Kondensator ausschleust, den unverdampften Teil auf die Kammer für den Auslass des Ablaufbehälters aufgibt, aus der man einen Teil des gereinigten Gemisches über die Auslassleitung abzieht, und den verbleibenden Rest des gereinigten Gemisches in die Kammer für den Zulauf des Ablaufbehälters aufgibt.

Der Teil des gereinigten Gemisches, den man über die Auslassleitung aus der Kammer für den Auslass des Ablaufbehälters abzieht, ist im kontinuierlichen, stationären Betrieb gleich der Differenz aus dem durch die Zulaufleitung zugeführten Massenstrom an Rohgemisch und dem im Kondensator kondensierten und ausgeschleusten Massenstrom.

Das Verfahren ist ebenfalls Gegenstand der Erfindung.

In einer Ausführungsform des Verfahrens heizt man das Rohgemisch vor Eintritt in den Ablaufbehälter vor. Dadurch erreicht man, dass in der Kammer für den Zulauf eine größere Menge der leichter flüchtigen Komponente verdampft wird.

In einer Ausführungsform des Verfahrens betreibt man den Umlaufverdampfer so, dass das Rohgemisch in die Kammer für den Zulauf des Ablaufbehälters unterhalb des Flüssigkeitsspiegels einströmt. Auf diese Weise wird sichergestellt, dass die zugelaufene Menge an Rohgemisch durch die Vermischung mit dem gereinigten Gemisch schnell aufgeheizt wird und die leichter flüchtige Komponente verdampfen kann. Je näher dabei der Ort des Zulaufs des Rohgemisches an dem Flüssigkeitsspiegel liegt, desto größer ist wegen des abnehmenden statischen Drucks in dem flüssigen Gemisch der Anteil an Leichtsieder, der in der Kammer für den Zulauf des Ablaufbehälters verdampft.

Alternativ kann man den Umlaufverdampfer auch so betreiben, dass das z.B. vorgeheizte Rohgemisch in die Kammer für den Zulauf des Ablaufbehälters oberhalb des Flüssigkeitsspiegels einströmt.

Je höher die Temperatur des zugeführten Rohgemisches ist, desto größer ist der Anteil an verdampften Leichtsieder in der Kammer für den Zulauf des Ablaufbehälters.

In der Regel beträgt das Verhältnis der Massenströme von durch die Umpumpleitung umgewälztem Gemisch zu dem durch die Zulaufleitung zugeführtem Rohgemisch 1 bis 100, bevorzugt 3 bis 20.

Bevorzugt wird der Umlaufverdampfer bei reduziertem Druck, vorzugsweise bei einem absoluten Druck von 1 bis 100 mbar, besonders bevorzugt von 2 bis 10 mbar, betrieben.

Das Verfahren ist besonders geeignet für die Trennung von einem oder mehreren Isocyanaten, bevorzugt Hexamethylendiisocyanat, von Lackharzen oder anderen Polyurethanen oder Gemischen daraus. Gemische, die mit dem Umlaufverdampfer nach dem Stand der Technik getrennt werden können, sind auch für die Trennung in dem erfindungsgemäßen gekammerten Umlaufverdampfer geeignet. Insbesondere sind die für die für Polyurethan - Lackanwendungen üblicherweise verwendeten Polyisocyanate mit Biuret - und/oder Isocyanurat- und/oder Allophanat- und/oder Urethanund/oder Uretdionstrukturen oder gemischte Typen mit den genannten Strukturelementen gut geeignet.

Anhand nachstehender Figuren wird die Erfindung beispielhaft näher erläutert. Es zeigen:
- Figur 1: einen Umlaufverdampfer nach dem Stand der Technik,
- Figur 2: einen erfindungsgemäßen Umlaufverdampfer mit parallel verschalteten Kammern des Ablaufbehälters,

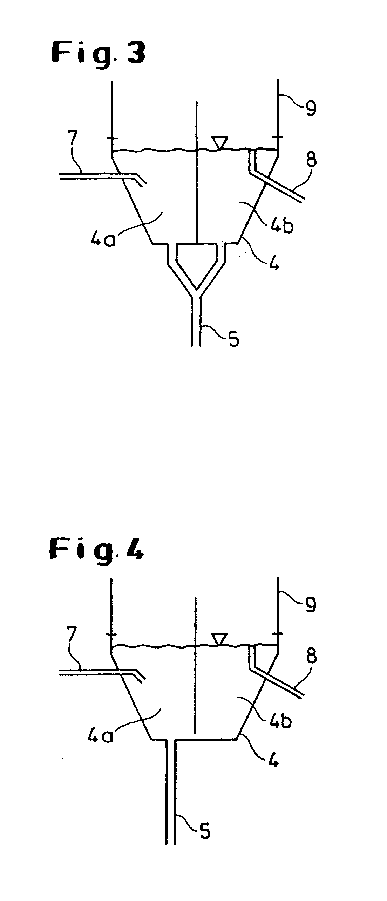

- Figur 3: eine alternative Ausführungsform eines Ablaufbehälters mit parallel verschalteten Kammern,
- Figur 4: eine alternative Ausführungsform eines Ablaufbehälters mit parallel verschalteten Kammern,

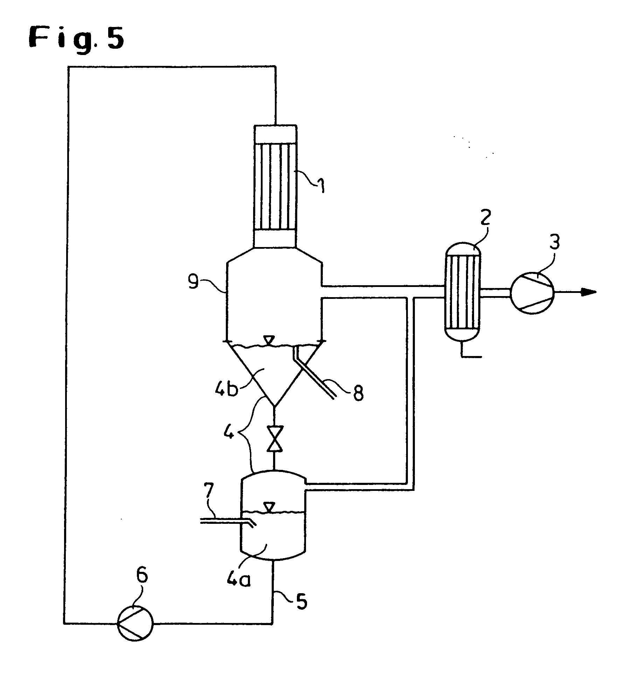

- Figur 5: einen Umlaufverdampfer mit seriell verschalteten Kammern des Aufgabebehälters.

### Beispiele

### Beispiel 1

### Destillative Abtrennung von Hexamethylendiisocyanat aus einem Gemisch von Polyisocyanaten mit Isocyanurat- und Uretdionstruktur

Für die Destillation wird ein Umlaufverdampfer gemäß Figur 2 eingesetzt. Ein Massenstrom von 800 kg/h der Zusammensetzung von 29 Gew.-% Lackharz und 71 Gew.-% Hexamethylendiisocyanat mit einer Temperatur von 120°C wird als Zulauf 7 in die Kammer für den Zulauf 4a des Ablaufbehälters 4 geleitet und mischt sich dort mit dem flüssigen Ablauf aus dem Verdampfer 1, der in die Kammer für den Ablauf 4b und die Kammer für den Zulauf 4a des Ablaufbehälters 4 mit einer Temperatur von 150°C abläuft. Ein Teil des Hexamethylendiisocyanats, das mit dem Zulauf 7 in die Kammer für den Zulauf 4a eingeleitet wurde, wird dabei verdampft.

Der aus dem Verdampfer 1 und der Kammer für den Zulauf 4a des Ablaufbehälters 4 verdampfte Massenstrom wird durch die Vakuumpumpe 3, die einen absoluten Druck von 10 mbar erzeugt, in den Kondensator 2 gefördert und dort kondensiert. Der aus dem Kondensator 2 ausgeschleuste Massenstrom beträgt 530 kg/h und hat die Zusammensetzung von 100 Gew.-% Hexamethylendiisocyanat.

Der über die Auslassleitung 8 aus der Kammer für den Ablauf 4b des Ablaufbehälters 4 ausgetragene Massenstrom beträgt 270 kg/h und hat die Zusammensetzung von 86 Gew.-% Lackharz und 14 Gew.-% Hexamethylendiisocyanat.

Die Kammern 4b für den Ablauf und Kammer 4a für den Zulauf sind kommunizierend miteinander verbunden.

Die Pumpe 6 fördert aus den beiden Kammern 4a und 4b des Ablaufbehälters 4 durch die Umpumpleitung 5 einen Massenstrom von ca. 7000 kg/h bei einer Temperatur von 140°C zu dem Kopf des Verdampfers 1.

### Beispiel 2

### Destillative Abtrennung von Hexamethylendiisocyanat aus einem Gemisch von Polyisocyanaten mit Biuretstruktur

Für die Destillation wird ein Umlaufverdampfer gemäß Figur 2 eingesetzt. Ein Massenstrom von 1450 kg/h der Zusammensetzung von 42 Gew.-% Lackharz und 58 Gew.-% Hexamethylendiisocyanat mit einer Temperatur von 145°C wird als Zulauf 7 in die Kammer für den Zulauf 4a des Ablaufbehälters 4 geleitet und mischt sich dort mit dem flüssigen Ablauf aus dem Verdampfer 1, der in die Kammer für den Ablauf 4b und die Kammer für den Zulauf 4a des Ablaufbehälters 4 mit einer Temperatur von 165°C abläuft. Ein Teil des Hexamethylendiisocyanats, das mit dem Zulauf 7 in die Kammer für den Zulauf 4a eingeleitet wurde, wird dabei verdampft.

Der aus dem Verdampfer 1 und der Kammer für den Zulauf 4a des Ablaufbehälters 4 verdampfte Massenstrom wird durch die Vakuumpumpe 3, die einen absoluten Druck von 10 mbar erzeugt, in den Kondensator 2 gefördert und dort kondensiert. Der aus dem Kondensator 2 ausgeschleuste Massenstrom beträgt 800 kg/h und hat die Zusammensetzung von 100 Gew.-% Hexamethylendiisocyanat.

Der über die Auslassleitung 8 aus der Kammer für den Ablauf 4b des Ablaufbehälters 4 ausgetragene Massenstrom beträgt 650 kg/h und hat die Zusammensetzung von 94 Gew.-% Lackharz und 6 Gew.-% Hexamethylendiisocyanat.

Die Kammern 4a für den Ablauf und Kammer 4b für den Zulauf sind kommunizierend miteinander verbunden.

Die Pumpe 6 fördert aus den beiden Kammern 4a und 4b des Ablaufbehälters 4 durch die Umpumpleitung 5 einen Massenstrom von ca. 10000 kg/h bei einer Temperatur von 155°C zu dem Kopf des Verdampfers 1.

## Patentansprüche

1. Umlaufverdampfer enthaltend einen Verdampfer (1) und einen damit über ein Verbindungsstück (9) verbundenen Ablaufbehälter (4), einen Kondensator (2), eine Vakuumpumpe (3), eine Umpumpleitung (5), die den Ablaufbehälter (4) mit dem Verdampfer (1) verbindet und eine Pumpe (6) enthält, eine Zulaufleitung (7) für das Rohgemisch und eine Auslassleitung (8) für das gereinigte Gemisch, **dadurch gekennzeichnet, dass** der Ablaufbehälter (4) mindestens aus einer Kammer für den Zulauf (4a) und einer Kammer für den Auslass (4b) besteht, wobei die Kammer für den Auslass (4b), an die die Auslassleitung (8) für das gereinigte Gemisch angeschlossen ist, direkt mit dem Verbindungsstück (9) für den Ablauf der nichtverdampften Flüssigkeit aus dem Verdampfer (1) verbunden ist, und wobei die Kammer für den Zulauf (4a), in die die Zulaufleitung (7) für das Rohgemisch mündet, direkt mit dem Kondensator (2) verbunden ist.

2. Umlaufverdampfer nach Anspruch 1, **dadurch gekennzeichnet, dass** die beiden Kammern (4a; 4b) des Ablaufbehälters (4) parallel geschaltet sind und beide über das Verbindungsstück (9) an den Verdampfer angeschlossen sind und beide einen Anschluss an die Rohrleitung (5) aufweisen.

3. Umlaufverdampfer nach Anspruch 1, **dadurch gekennzeichnet, dass** die beiden Kammern (4a; 4b) des Ablaufbehälters (4) seriell verschaltet sind, wobei die Kammer für den Zulauf (4a), in die die Zulaufleitung (7) für das Rohgemisch mündet, hinter der Kammer für den Auslass (4b), aus der die Auslassleitung (8) für das gereinigte Gemisch führt, angeordnet ist und den Anschluss für die Rohrleitung (5) aufweist und wobei die Kammer für den Auslass (4b) über das Verbindungsstück (9) an den Verdampfer angeschlossen ist.

4. Verfahren zur destillativen Trennung eines Gemisches aus leichter und schwerer flüchtigen Komponenten, wobei man einen Umlaufverdampfer nach einem der Ansprüche 1 oder 2 einsetzt, wobei man der Kammer für den Zulauf (4a) des Ablaufbehälters (4) das Rohgemisch durch die Zulaufleitung (7) zuführt, dort 1 bis 95 %, vorzugsweise 10 bis 80% der leichter flüchtigen Komponente verdampft und im Kondensator (2) wieder kondensiert und aus dem Kondensator (2) ausschleust, den unverdampften Teil aus dem Ablaufbehälter (4) über eine Rohrleitung (5) auf den Verdampfer (1) aufgibt, dort 10 bis 99 %, vorzugsweise 50 bis 90 % der leichter flüchtigen Komponente verdampft und im Kondensator (2) wieder kondensiert und aus dem Kondensator (2) ausschleust, den unverdampften Teil auf die beiden Kammern (4a; 4b) des Ablaufbehälters (4) aufgibt und aus der Kammer für den Auslass (4b) des Ablaufbehälters (4) einen Teil des gereinigten Gemisches über die Auslassleitung (8) abzieht.

5. Verfahren zur destillativen Trennung eines Gemisches aus leichter und schwerer flüchtigen Komponenten, wobei man einen Umlaufverdampfer nach einem der Ansprüche 1 oder 3 einsetzt, wobei man der Kammer für den Zulauf (4a) des Ablaufbehälters (4) das Rohgemisch durch die Zulaufleitung (7) zuführt, dort 1 bis 95 %, vorzugsweise 10 bis 80 % der leichter flüchtigen Komponente verdampft und im Kondensator (2) wieder kondensiert und aus dem Kondensator (2) ausschleust, den unverdampften Teil über eine Rohrleitung (5) auf den Verdampfer (1) aufgibt, dort 10 bis 99 %, vorzugsweise 50 bis 90 % der leichter flüchtigen Komponente verdampft und im Kondensator (2) wieder kondensiert und aus dem Kondensator (2) ausschleust, den unverdampften Teil auf die Kammer für den Auslass (4b) des Ablaufbehälters (4) aufgibt, aus der man einen Teil des gereinigten Gemisches über die Auslassleitung (8) abzieht, und den verbleibenden Rest des gereinigten Gemisches in die Kammer für den Zulauf (4a) des Ablaufbehälters (4) aufgibt.

6. Verfahren nach Anspruch 4 bis 5, **dadurch gekennzeichnet, dass** man das Rohgemisch vor Eintritt in den Ablaufbehälter (4) vorheizt.

7. Verfahren nach einem der Ansprüche 4 bis 6, **dadurch gekennzeichnet, dass** man den Umlaufverdampfer so betreibt, dass das Rohgemisch in die Kammer für den Zulauf (4a) des Ablaufbehälters (4) unterhalb des Flüssigkeitsspiegels einströmt.

8. Verfahren nach einem der Ansprüche 4 bis 7, **dadurch gekennzeichnet, dass** das Verhältnis der Massenströme von durch die Umpumpleitung (5) umgewälztem Gemisch zu dem durch die Zulaufleitung (7) zugeführtem Rohgemisch 1 bis 100, bevorzugt 3 bis 20 beträgt.

9. Verfahren nach einem der Ansprüche 4 bis 8, **dadurch gekennzeichnet, dass** man ein oder mehrere Isocyanate von Polyurethanen oder von Polyisocyanaten abtrennt.

10. Verfahren nach Anspruch 9, **dadurch gekennzeichnet, dass** das Isocyanat Hexamethylendiisocyanat ist.
